Europäisches Patentamt

**European Patent Office**

Office européen des brevets

(11) Veröffentlichungsnummer: **0 086 852**
**B1**

(12) **EUROPÄISCHE PATENTSCHRIFT**

(45) Veröffentlichungstag der Patentschrift:
27.08.86

(51) Int. Cl.⁴: **F 16 B 25/00,** F 16 B 39/30

(21) Anmeldenummer: **82101211.9**

(22) Anmeldetag: **18.02.82**

(54) **Schraube.**

(43) Veröffentlichungstag der Anmeldung:
**31.08.83 Patentblatt 83/35**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**NL - A - 6 408 951**

**PRODUCT ENGINEERING, Band 50, Nr. 4, April 1979,
Seiten 55-59, "World of self-locking screws grows"
DUBBEL I, 1955, Seite 602**

(73) Patentinhaber: **Conti Fasteners AG, Bahnhofstrasse 29,
CH-6300 Zug (CH)**

(72) Erfinder: **Webendörfer, Rudolf, Dipl.-Ing., Auf dem
Wingertsberg 37, D-5450 Neuwied 23 (DE)**
Erfinder: **Taubert, Hubert, Dipl.-Ing., Klosterstrasse 12,
D-5450 Neuwied 21-Engers (DE)**

(74) Vertreter: **Patentanwälte Dipl.-Ing. J. Richter Dipl.-Ing. F.
Werdermann, Neuer Wall 10, D-2000 Hamburg 36 (DE)**

## Beschreibung

Die Erfindung betrifft eine Schraube mit einem ein Gewinde aufweisenden Schraubenkörper mit mehreren Gewindeabschnitten mit unterschiedlichen Hüllkreisdurchmessern und unterschiedlichen Gewindeformen, wobei der Schraubenkörper im Bereich der ersten Gewindegänge eine dreilobulare Gewindeform mit auf ihrem Umfang jeweils um 120° versetzten Hochstellen mit sich vom Schraubenende her vergrössernden Hüllkreisdurchmessern des Schraubengewindes, einen sich an die ersten Gewindegänge anschliessenden Gewindeabschnitt mit einer dreilobularen Gewindeform mit gleichbleibenden Hüllkreisdurchmessern des Schraubengewindes, einen sich an den Gewindeabschnitt mit der dreilobularen Gewindeform in allmählichen Übergang anschliessenden weiteren Gewindeabschnitt mit einer zirkularen Gewindeform im Hüllkreisdurchmesser aufweist.

Als selbstsperrendes bzw. rüttelsicheres Verbindungselement ist eine Sicherungsschraube bekannt, die eine dreilobulare Geometrie des Gewindekörpers mit einem speziellen Gewindeflankenwinkel 60°/30° aufweist. In einer Mutter oder einer Gewindebohrung in Stahl, Blech oder anderen geeigneten Werkstoffen sichert sich eine derart ausgebildete Gewinde-Sperrschraube selbst, und zwar durch die Klemmkraft der dreilobularen Gewindespitzen am Metall des Gegengewindes und durch den innigen Kontakt der 30° Gewindespitzen auf dem dreilobularen Schraubenumfang mit dem Gegengewinde, wodurch Längs- oder Querbewegungen zwischen Schraube und beispielsweise Mutter ausgeschlossen sind. Derartige Gewinde-Sperrschrauben lösen sich nicht durch Schwingungen und Vibration (POWERLOK, PRODUCT ENGINEERING, Band 50, Nr. 4; IV, 79; Seiten 55–59).

Es hat sich jedoch gezeigt, dass mit derart ausgebildeten Gewinde-Sperrschrauben zwar ein hoher Vibrationswiderstand und eine hervorragende Schraubensicherung garantiert wird, jedoch eine Abdichtung gegen das Durchdringen von Flüssigkeit, wie Wasser, Hydrauliköl od. dgl., nicht gewährleistet ist. Flüssigkeit dringt zwischen dem Gewinde der Sperrschraube und dem Gegengewinde hindurch.

Des weiteren ist auch eine Schraube bekannt, die ihr Gewinde spanlos selbst durch bildsame Umformung ausbildet und in der Weise ausgebildet ist, dass die Schraube eine dreilobulare Geometrie des Gewindekörpers aufweist mit einem Flankenwinkel von 60°. Die Gewindegänge laufen unter Beibehaltung ihrer ausgeprägten Geometrie und der Spitze des Flankenwinkels von 60° auf einer Länge von ca. 3 Steigungen zum Schraubenende hin aus (TAPTITE). Zur Verbesserung der Positionierung in der Bohrung und des Schraubensatzes wurde die Spitze derart weiterentwickelt, dass die Schraube an den ersten drei bis vier Gewindegängen der Schraubenspitze unter Beibehaltung der dreilobularen Gewindeform mit einem kleineren Durchmesser ausgebildet ist (DUO-TAPTITE). Die Masse des Hüllkreises der Dreilobularform und der Flankenwinkel von 60° des Gewindekörpers sind bei den Schraubenausführungen so gewählt, dass nach Verschrauben und Lösen eine Austauschbarkeit des geformten Muttergewindes mit einer Normschraube gewährleistet ist. Eine derartig ausgebildete Schraube TAPTITE bzw. DUO-TAPTITE formt ihr Gegengewinde spanlos selbst. Es entfällt das Schneiden des Muttergewindes. Der Faserverlauf im Gegengewinde wird beim Eindrehen dieser Schraube durch Kaltformung verdichtet und verfestigt, wobei der Werkstoff spielfrei die Gewindeflanken dieser Schraube ohne Steigungsfehler umfliesst.

Eine weitere bekannte Schraubenart weist einen dreilobularen Eintrittsabschnitt auf, an dem sich ein dreilobularer Zwischenabschnitt und ein zirkulärer Halteabschnitt anschliesst, wobei erreicht werden soll, dass beim Einschrauben mit gleichzeitigem Gewindeformen ein niedriges Drehmoment anzuwenden ist, beim späteren Anziehen der Schraube aber ein möglichst hohes Anziehdrehmoment notwendig wird (NL-A-6 408 951).

Eine Selbsthemmung gegen eine Vibrationslösung oder eine Dichtwirkung im Gewinde ist bei derartigen Schrauben nicht vorgesehen.

Die Erfindung löst daher die Aufgabe, eine Schraube mit einem ein Gewinde aufweisenden Schraubenkörper mit mehreren Gewindeabschnitten mit unterschiedlichen Hüllkreisdurchmessern und unterschiedlichen Gewindeformen, wobei der Schraubenkörper im Bereich der ersten Gewindegänge eine dreilobulare Gewindeform mit auf ihrem Umfang jeweils um 120° versetzten Hochstellen mit sich vom Schraubenende her vergrössernden Hüllkreisdurchmessern des Schraubengewindes, einen sich an die ersten Gewindegänge anschliessenden Gewindeabschnitt mit einer dreilobularen Gewindeform mit gleichbleibenden Hüllkreisdurchmessern des Schraubengewindes, einen sich an den Gewindeabschnitt mit der dreilobularen Gewindeform in allmählichem Übergang anschliessenden weiteren Gewindeabschnitt mit einer zirkularen Gewindeform im Hüllkreisdurchmesser aufweist, so zu schaffen, dass sie in ein bestehendes Muttergewinde eingeschraubt oder alternativ ihr Gegengewinde selbst spanlos formend eingeschraubt nicht nur gegen ein Lösen durch Vibration sicherbar ist, sondern darüber hinaus eine hohe Dichtung zwischen Schraubengewinde und Gegengewinde gewährleistet, so dass durch die Gewindeverbindung (Schraubengewinde/Gegengewinde) keine Feuchtigkeit und insbesondere keine Flüssigkeit, auch wenn diese unter Druck steht, hindurchdringen kann.

Zur Lösung dieser Aufgabe wird eine Schraube gemäss der eingangs beschriebenen Art vorgeschlagen, die in der Weise ausgebildet ist, dass die Schraube im Bereich der ersten Gewindegänge am Schraubenende und in dem sich an die ersten Gewindegänge anschliessenden Gewindeabschnitte einen Gewinde-Flankenwinkel von 60° sowie zusätzliche Gewindespitzen mit einem Flankenwinkel von 20°, 30° oder 40°, und in dem weiteren sich anschliessenden Gewindeabschnitt einen Gewinde-Flankenwinkel von 60° sowie zusätzliche Gewindespitzen mit einem Flankenwinkel von 20°, 30° oder 40° aufweisen, wobei der Neigungswinkel des Überganges des Gewindes des Gewindeabschnittes mit der zirkularen Gewindeform zu dem Gewinde des Gewindeabschnittes mit der dreilobularen Gewindeform in der Mitte zwischen zwei Hochstellen etwa 10° bis 20°, vorzugsweise 13° bis 15°, beträgt, aufweist.

Mit einer derart ausgebildeten Schraube ist eine Abdichtung und eine Einstellschraube geschaffen, bei der die ersten Gewindegänge am Schraubenende dreilobulare Gewindespitzen aufweisen, um je nach Festigkeit und Duktilität des Muttergewindes mit den dreilobularen Gewindespitzen eine entsprechende Geometrie im Aussendurchmesser des Muttergewindes zu formen, wobei sich die Länge des dreilobularen Gewindekörpers nach der Mutterhöhe richtet, und bei der die dreilobulare Geometrie der Schraubenspitze in eine zirkulare Geometrie unter Beibehaltung der 60°/30° Gewinde-Flankenwinkel übergeht, so dass sich die zirkulare 60°/30° Gewindespitze ohne Spiel in die vorgeformte Geometrie im Aussendurchmesser des Muttergewindes einfügt und somit die Gewindebohrung abgedichtet wird. Je nach Toleranzlage des Muttergewindes wird zugleich aufgrund des Reibschlusses ein Festsitz im Gewinde erzeugt, der diesem Verbindungselement die Funktion einer Stift- und Einstellschraube gibt.

Ausserdem weist eine derart ausgebildete Schraube neben der ausgezeichneten selbstsperrenden bzw. gewindeformenden Eigenschaft auch die Eigenschaft einer hohen Abdichtung zwischen Schraubengewinde und Gegengewinde auf, wobei sich die zirkulare 69°/30° Gewindespitze ohne Spiel in die vorgeformte Geometrie im Aussendurchmesser des Muttergewindes einfügt und somit die Gewindebohrung abgedichtet wird, wobei zur Erzielung der abgedichteten Wirkung wesentlich der Übergang von dem dreilobularen Schraubenkörper zur zirkularen Gewindeform zum Hüllkreisdurchmesser beiträgt.

Abgesehen von den zusätzlichen Gewindespitzen sind die Flankenwinkel der selbstformenden Schrauben 60° entsprechend den Flankenwinkeln der NORM-Schrauben und NORM-Muttern. Je nach Toleranzlage des Muttergewindes bei der selbstsperrenden Schraube (POWERLOK) bzw. des spielfrei sich selbst erzeugenden Gewindes bei der selbstformenden Schraube (TAPTITE bzw. DUO-TAPTITE) wird zugleich aufgrund des Reibschlusses ein Festsitz im Gewinde erzeugt, der diesem Verbindungselement die Funktion einer Stift- und Einstellschraube gibt. Auf diese Weise ist die Gewindebohrung abgedichtet und es hat sich überraschenderweise gezeigt, dass auch unter Druck in den Bereich der Gewindebohrung zugeführte Flüssigkeit zurückgehalten wird und nicht in die Gewindebohrung hindurchtreten kann.

Vorteilhafte Weiterbildungen der Erfindung sind in den Unteransprüchen beschrieben. Im folgenden wird der Gegenstand der Erfindung in den Zeichnungen erläutert. Es zeigt:

Fig. 1 in einer Seitenansicht den Schaft einer Schraube mit dreilobularer Gewindespitze, sich hieran anschliessender dreilobularer Gewindegeometrie des Schraubenkörpers und hieran anschliessender zirkularer Gewindegeometrie,

Fig. 2 einen senkrechten Querschnitt des Schraubenschaftes mit der dreilobularen Gewindeform des Schraubenumfangs mit den jeweiligen Hüllkreisen,

Fig. 3 einen Querschnitt durch den Schraubenschaft im Bereich der dreilobularen Gewindegeometrie G,

Fig. 4 eine vergrösserte Darstellung einer dreilobularen Gewindespitze in einem Gegengewinde,

Fig. 5 in einer Seitenansicht den Schaft einer Schraube mit gewindeformenden Eigenschaften und einer sich an die dreilobulare Gewindegeometrie anschliessenden zrikularen Gewindegeometrie,

Fig. 6 einen senkrechten Querschnitt des Schraubenschaftes gemäss Linie VI–VI in Fig. 5,

Fig. 7 einen senkrechten Schnitt gemäss Linie VII–VII in Fig. 5 und

Fig. 8 einen Querschnitt durch den Schraubenschaft gemäss Linie VIII–VIII in Fig. 5.

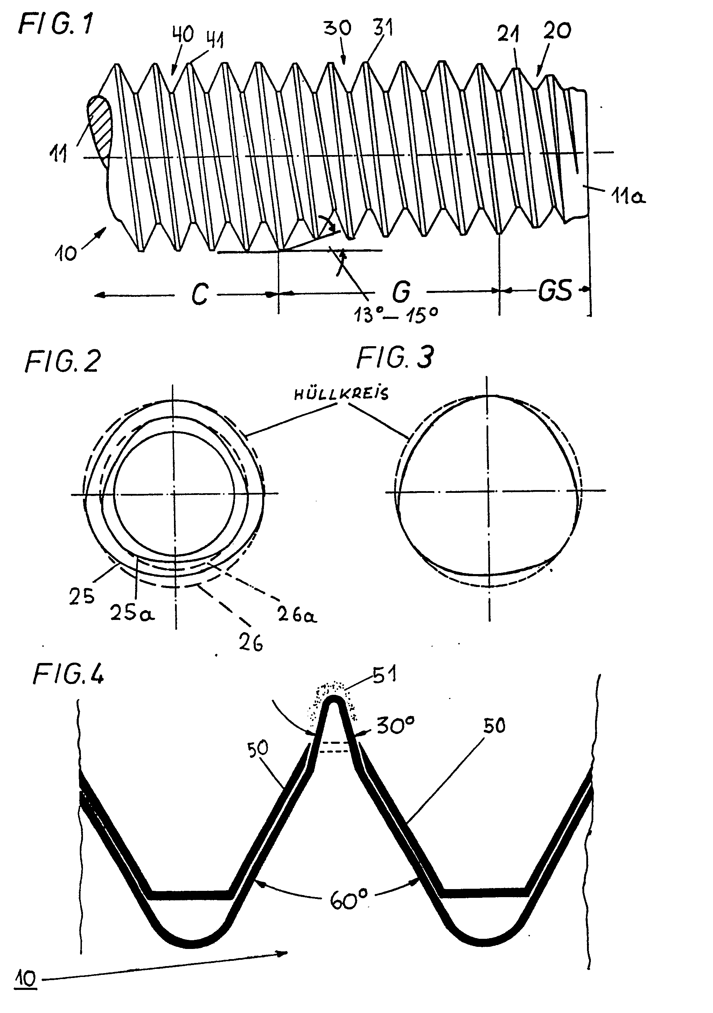

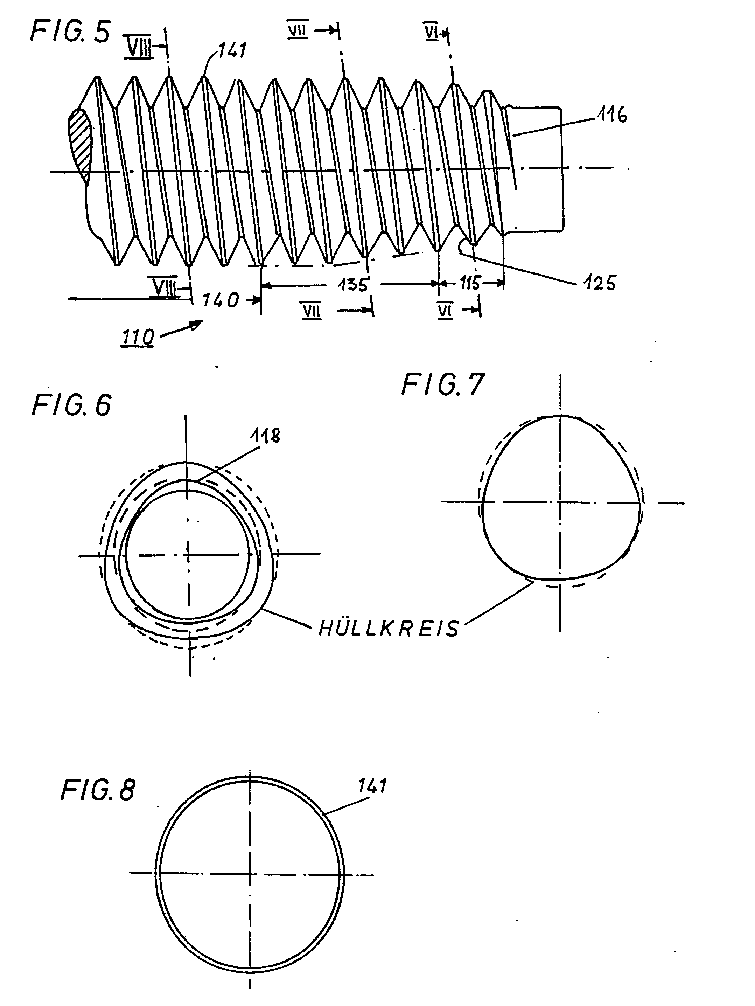

Die in Fig. 1 mit 10 bezeichnete Schraube besteht aus einem Schraubenschaft 11, dessen Ende bei 11a angedeutet ist. Die Schraube 10 weist im Bereich der ersten Gewindegänge 20 am Schraubenschaftende 11a eine dreilobulare Gewindeform auf. Jedem dreilobularen Gewinde 25, 25a ist ein Hüllkreis 26, 26a zugeordnet, um die dreilobulare Querschnittsform bestimmen und mit Massangaben versehen zu können (Fig. 2). Die Hüllkreisdurchmesser· der Schraubengewinde vergrössern sich von dem Schraubenschaftende 11a in Richtung zum anderen Schraubenschaftende. Diese dreilobulare Gewindeform mit auf ihrem Umfang jeweils um 120° versetzten drei Hochstellen bewirkt beim Einschrauben ein niedriges Drehmoment.

Die Gewindespitzen sind mit Flankenwinkeln von 60° versehen und gehen in ihren Endbereichen in 30° Flankenwinkel über (Fig. 4).

An die dreilobulare Gewindespitze GS schliesst sich ein Gewindeabschnitt mit dreilobularer Gewindegeometrie auf dem Schraubenschaft 11 an. Dieser Gewindeabschnitt 30 mit dreilobularer Gewindegeometrie G weist ebenfalls einen dreilobularen Schraubenumfang auf, der jedoch in diesem Gewindeabschnitt 30 gleichbleibend, d.h. mit gleichem Hüllkreisdurchmesser ausgebildet ist (Fig. 3). Die Gewinde selbst weisen Flankenwinkel von 60° auf, während die Gewindespitzen 31 mit Flankenwinkeln von 30° versehen sind (Fig. 4).

An diesen Gewindeabschnitt 30 mit dreilobularer Gewindeform schliesst sich ein weiterer Gewindeabschnitt 40 mit einer zirkularen Gewindegeometrie C an. Die Gewinde dieses Gewindeabschnittes 40 weisen ebenfalls Flankenwinkel von 60° auf, während die über den Nenndurchmesser hinaus verlaufenden Gewindespitzen 41 mit Flankenwinkeln von 30° versehen sind (Fig. 1).

Die beiden Gewindeabschnitte 30 und 40 gehen unter einem Neigungswinkel von 10° bis 20°, vorzugsweise 13° bis 15°, ineinander über, d.h. der Übergang des Gewindes des Gewindeabschnittes 40 mit der zirkularen Gewindeform geht in der Mitte zwischen zwei Hochstellen des Gewindes des Gewindeabschnittes 30 mit der dreilobularen Gewindegeometrie unter einem Neigungswinkel von 10° bis 20°, vorzugsweise 13° bis 15° über.

Fig. 4 zeigt das in ein Gegengewinde, d.h. in das Gewinde einer Mutter oder einer Gewindebohrung, eingeschraubte Gewinde mit dreilobularer Gewindegeometrie. Das Gegengewinde ist dabei mit 50 bezeichnet. Die Materialverfestigung im Gewindespitzenbereich ist bei 51 angedeutet.

Die Schraube kann anstelle eines 60°/30° Gewinde-Flankenwinkels einen 60°/40° oder 60°/20° od.dgl. Winkel aufweisen.

Fig. 5 zeigt eine gewindeformende Schraube, die an den ersten drei bis vier Gewindegängen 115 der Schraubenspitze einen von der Schraubenspitze zum Schraubenkörper sich vergrössernden Hüllkreisdurchmesser aufweist. Hieran schliesst sich ein Gewindeabschnitt 135 mit dreilobularer Gewindeform und sich vergrösserndem Hüllkreis und weiterer Gewindeabschnitt 140 mit einer zirkularen Gewindegeometrie an. Die Gewinde dieses Gewindeabschnittes 140 weisen Flankenwinkel von 60° auf.

Die beiden Gewindeabschnitte 135 und 140 gehen unter einem Neigungswinkel von 10° bis 20°, vorzugsweise 13° bis 15° ineinander über, d.h. der Übergang des Gewindes des Gewindeabschnittes 140 mit der zirkularen Gewindeform geht in der Mitte zwischen zwei Hochstellen des Gewindes des Gewindeabschnittes 135 mit der dreilobularen Gewindeform unter dem Neigungswinkel von 10° bis 20°, vorzugsweise 13° bis 15° über.

Ausserdem kann die Geometrie des Gewindekörpers derart sein, dass die Schraube anstatt mit einer dreilobularen, mit auf ihrem Umfang an drei Hochstellen jeweils um 120° versetzten Gewindeform mit einer an vier Hochstellen jeweils um 90° oder an zwei Hochstellen jeweils um 180° versetzten Gewindeform mit einem Übergang von den Hochstellen zur Zirkulargeometrie des Hochstellendurchmessers versehen ist. Die Schraube ist ferner mit einem nicht mit NORM-Muttergewinden korrespondierenden Hochstellen-Aussendurchmesser versehen. Darüber hinaus ist ein Übergang von der nicht kreisrunden Gewindegeometrie zur zirkularen Gewindegeometrie auf das Mass des Hüllkreises gegeben.

## Patentansprüche

1. Schraube (10) mit einem ein Gewinde aufweisenden Schraubenkörper mit mehreren Gewindeabschnitten mit unterschiedlichen Hüllkreisdurchmessern und unterschiedlichen Gewindeformen, wobei der Schraubenkörper im Bereich der ersten Gewindegänge (20) eine dreilobulare Gewindeform mit auf ihrem Umfang jeweils um 120° versetzten Hochstellen mit sich vom Schraubenende (11a) her vergrössernden Hüllkreisdurchmessern des Schraubengewindes, einen sich an die ersten Gewindegänge anschliessenden Gewindeabschnitt (30) mit einer dreilobularen Gewindeform mit gleichbleibenden Hüllkreisdurchmessern des Schraubengewindes, einen sich an den Gewindeabschnitt mit der dreilobularen Gewindeform in allmählichem Übergang anschliessenden weiteren Gewindeabschnitt (40) mit einer zirkularen Gewindeform im Hüllkreisdurchmesser aufweist, dadurch gekennzeichnet, dass die Schraube (10) im Bereich der ersten Gewindegänge (20) am Schraubenende (11a) und in dem sich an die ersten Gewindegänge (20) anschliessenden Gewindeabschnitte (30) einen Gewinde-Flankenwinkel von 60° sowie zusätzliche Gewindespitzen (21) mit einem Flankenwinkel von 20°, 30° oder 40°, und in dem weiteren sich anschliessenden Gewindeabschnitt (40) einen Gewinde-Flankenwinkel von 60° sowie zusätzliche Gewindespitzen mit einem Flankenwinkel von 20°, 30° oder 40° aufweisen, wobei der Neigungswinkel des Überganges des Gewindes des Gewindeabschnittes (40) mit der zirkularen Gewindeform zu dem Gewinde des Gewindeabschnittes (30) mit der dreilobularen Gewindeform in der Mitte zwischen zwei Hochstellen etwa 10° bis 20°, vorzugsweise 13° bis 15°, beträgt, aufweist.

2. Schraube nach Anspruch 1, dadurch gekennzeichnet, dass die Schraube in ihrem ersten und zweiten Gewindeabschnitt (20, 30) anstatt der dreilobularen Gewindeform eine mit auf ihrem Umfang jeweils um 90° versetzten vier Hochstellen versehene Gewindeform aufweist.

3. Schraube nach Anspruch 1, dadurch gekennzeichnet, dass die Schraube in ihrem ersten und zweiten Gewindeabschnitt (20, 30) anstatt der dreilobularen Gewindeform eine mit auf ihrem Umfang jeweils um 180° versetzten zwi Hochstellen versehene Gewindeform aufweist.

## Claims

1. Screw (10) with a screw body having a thread with several threaded portions having different enveloping circle diameters and different thread shapes, the screw body having in the vicinity of the first thread courses (20) a trilobular thread shape with circumferential high points displaced in each case by 120° with screw thread enveloping circle diameters increasing from the screw end (11a), a threaded portion (30) connected to the first thread courses having a trilobular thread shape with constant enveloping circle diameters of the screw thread, and with a further threaded portion (40) connected in gradual transition to the threaded portion with the trilobular thread shape and having a circular thread shape in the enveloping circle diameter, characterized in that the screw (10) in the vicinity of the first thread courses (20) on screw end (11a) and in the threaded portions (39) connected to the first thread courses (20) has a thread flank angle of 60°, as well as additional crests (21) with a flank angle of 20, 30 of 40° and in the following threaded portion (40) a thread flank angle of 60°, as well as additional crests with a flank angle of 20, 30 or 40°, the angle of inclination of the transition of the thread of the threaded portion (40) with the circular thread shape to the thread of the threaded portion (30) with the trilobular thread shape in the centre between two high points is approximately 10 to 20° and preferable 13 to 15°.

2. Screw according to claim 1, characterized in that, instead of the trilobular thread shape, in the first and second threaded portions (20, 30) of the screw, the latter has a thread shape with on its circumference 4 high points in each case displaced by 90°.

3. Screw according to claim 1, characterized in that, instead of the trilobular thread shape, in its first and second threaded portions (20, 30) the screw has a thread shape provided on its circumference with two high points in each case displaced by 180°.

**Revendications**

1. Vis (10) avec un corps de vis présentant un filet comportant plusieurs portions de filet avec différents diamètres de cercle circonscrit et différentes formes de filet, le corps de vis présentant, dans la zone des premières spires (20), une forme de filet trilobulaire avec des endroits surélevés décalés respectivement de 120° sur sa périphérie avec des diamètres de cercle circonscrit du filet de la vis qui s'accroissent à partir de l'extrémité de la vis (11a), une portion de filet (30) suivant les premières spires de filet avec une forme de filet trilobulaire avec des diamètres de cercle circonscrit du filet de la vis qui sont constants, une autre portion de filet (40) suivant la portion de filet à la forme de filet trilobulaire en transition graduelle avec une forme de filet circulaire du diamètre du cercle circonscrit, caractérisée en ce que la vis (10) présente dans la zone des premières spires (20) à l'extrémité de la vis (11a) et dans la portion de filet (30) qui suit les premières spires (20) un angle de flanc de filets de 60° ainsi que des sommets de filet supplémentaires (21) avec un angle de flanc de 20°, 30° ou 40° et dans la portion de filet suivante (40) un angle de flanc de filets de 60° ainsi que des sommets de filet supplémentaires avec un angle de flanc de 20°, 30° ou 40°, l'angle d'inclinaison de la transition du filet de la portion de filet (40) à la forme de filet circulaire au filet de la portion de filet (30) à la forme de filet trilobulaire étant au milieu entre deux endroits surélevés de 10° à 20° environ, de préférence de 13° à 15°.

2. Vis selon la revendication 1, caractérisée en ce que la vis présente dans sa première et dans sa deuxième portion de filet (20, 30) une forme de filet pourvue sur sa périphérie de quatre endroits surélevés décalés respectivement de 90° à la place de la forme de filet trilobulaire.

3. Vis selon la revendication 1, caractérisée en ce que la vis présente dans sa première et dans sa deuxième portion de filet (20, 30) une forme de filet pourvue sur sa périphérie de deux endroits surélevés décalés respectivement de 180° à la place de la forme de filet trilobulaire.

FIG.1

FIG.2

FIG.3

HÜLLKREIS

FIG.4

FIG. 5

VIII →
VII →
VI →

141

116

VIII →
140
110 →

135
115
125

VII →
VI →

FIG. 6

FIG. 7

118

HÜLLKREIS

FIG. 8

141